# EUROPEAN PATENT APPLICATION

(11) **EP 2 733 655 A1**
(43) Date of publication of application: **21.05.2014**
(21) Application number: 13193663.5
(22) Date of filing: 20.11.2013
(51) Int. Cl.: G06Q 20/20, G06Q 20/32, G06Q 20/34, G06Q 20/38, G06Q 20/40, G06Q 20/42, G07F 7/08, G07F 7/10

(54) **Electronic payment method and device for securely exchanging payment information**

(30) Priority: 20.11.2012 EP 12193476
(71) Applicant: Nagravision S.A., 1033 Cheseaux-sur-Lausanne (CH)
(72) Inventor: Karlov, Alexandre, 1217 Meyrin (CH); Hauert, Patrick, 1092 Belmont (CH)
(74) Representative: Leman Consulting S.A.

(57) **Abstract**

The present invention relates to an electronic payment method for securely exchanging information between an authentication device (10) and a server (30) via a communication device (20). The method comprises the following steps:
- acquiring by the authentication device (10) a payment amount (2) and a seller identifier (32),
- displaying the payment amount (2) on a display (16) of said authentication device (10),
- acquiring by the authentication device (10) user feedback data (3) by means of a user interface (12) of said authentication device (10),
- generating, at the authentication device, a secure payment request (18) comprising the displayed payment amount, said seller identifier and an authentication device identifier (17) stored in the authentication device (10),
- transmitting said secure payment request (18) to the server (30) by using said communication device (20) as relaying device.

## Description

### TECHNICAL FIELD

The present invention relates to the field of electronic commerce (e-commerce), where the purchase and the sale of products or services is conducted over electronic systems through communication networks, such as internet or a mobile phone network, in order to perform online payments.

### BACKGROUND ART

Online shopping involves securely exchanging payment information between vendors (servers) and buyers which use communication devices, such as personal computers or portable devices, to establish secure communications with servers acting as vendors.

With the development of the information and communication technology, it has become common to use computer workstation or portable devices, such as smart phones or tablet computers, for different purposes and in particular for electronic shopping. However, these personal electronic devices are not primarily devoted for commercial transactions. To address this deficiency, they can be rendered compliant for such operations by the implementation of specific software or application. For instance, a smart phone can be used as portable payment means, e.g. as electronic purse, by using specific application software that can be easily installed into the portable device for allowing the user to perform specific tasks for commercial purposes.

However, users performing such electronic payments have to trust the applications, namely software installed into the computer or the mobile device, when these devices are used to perform payment orders by processing sensitive data such as credit card information. Inevitably the underground economy and black market follows very closely technological trends with banking and payment frauds being one of the most successful businesses for cybermafias and cybercrime. Malware for computer workstations, smart phones and tablet computers is becoming widespread and it is a matter of short period of time for it to be used for banking fraud. The user has no real possibility to know if the payment software downloaded into his personal device is genuine or if his personal device has been infected by a malware for spying, gathering or diverting sensitive information during transactions. Electronic payment fraud is a huge problem that costs banks and consumers billions per year.

Therefore the problem today is how to bring additional assurance together with the required security in order to perform trusted transactions (e.g. exchanges of information, authorizations, identity or device authentications, digital signatures, etc...) in a convenient and user-friendly way on a payment terminal such as a personal computer or a mobile platform (e.g. a smart phone).

To attempt solving this problem, the document W02012/004395 suggests a stand-alone secure PIN entry device for enabling card transactions with separate card reader. This document discloses a method for conducting secure electronic payments to a vendor using a credit card payment unit and a payment server. The payment unit comprises a smart card (e.g. a credit card), a portable card reader device, a mobile phone and a stand-alone PIN entry device. The method suggested in this document aims to eliminate the unsecure keyboard in a mobile phone used for entering personal identification information, such a PIN code, and therefore use a separate secure PIN entry device for this purpose.

Although, all sensitive payment information communicated between the PIN entry device, the card reader and the mobile phone are encrypted, as well as sensitive payment information exchanged between the payment unit and the payment server, the method suggested in this document reveals at least two problems.

Indeed, this document does not suggest a tamper proof method because even if user authentication data is entered in a secure stand-alone PIN entry device and even if all data transmitted between each entity (PIN entry device, card reader, mobile phone, server, etc..) are encrypted, there is still a gap for malicious persons wanting to hack such a payment method and make fraudulent transactions.

Moreover, the method suggested in this document discloses successive data exchanges (sending PIN serial number, reader serial number, acknowledgments, requests) between entities of the payment unit and between the payment unit and the payment server, until the payment order is approved by the server. Accordingly, performing many exchanges between the payment unit and the payment server for processing a single payment does not correspond to an optimum real time payment process because it requests a certain bandwidth and successive time slots at the payment server. Given that the server must simultaneously process numerous electronic transactions with a lot of other payment units, the risk that the server become overload and needs more time to approve the payment is therefore increased.

Therefore, there is a need to improve online payment process with payment cards (e.g. debit card, credit card, pre-paid card, electronic purse or any other bank card, etc...). More particularly, there is a need to improve the security and/or the efficiency of electronic payments made through a network by a user to a server (representing an e-seller, e-vendor or e-merchant) via a personal communication device used by the user as a gateway or payment terminal. Such a personal communication device can be a personal computer or any personal portable device (mobile phone, laptop, notebook, pad, personal digital assistant, etc...).

### SUMMARY OF THE INVENTION

In order to solve at least one of the above-mentioned problems, the present invention suggests performing in a secure environment any operation involving sensitive data. Besides, it suggests using the gateway (personal payment terminal) as a relaying device, only for forwarding information such as payment request or transaction information to the appropriate recipient.

To this aims, the present invention suggests an electronic payment method for securely exchanging information between an authentication device (e.g. an enhanced credit card) and a server (e.g. an e-merchant) via a communication device (e.g. a personal computing device or a smart phone). According to the invention the method comprises the steps of:
- acquiring by the authentication device a payment amount and a seller identifier,
- displaying the payment amount on a display of the authentication device,
- acquiring by the authentication device user feedback data by means of a user interface of the authentication device,
- generating, at the authentication device, a secure payment request comprising the displayed payment amount, the seller identifier and an authentication device identifier stored in the authentication device,
- transmitting the secure payment request to the server by using the communication device as relaying device.

According to the invention, the communication device is only used for relaying communications to the appropriate recipient, in particular secure communications, exchanged between the authentication device and the server. According to a basic scheme, the communication device is used to receive the payment request from the authentication device and then to transmit this payment request to the appropriate server. In variant, the communication device could be also used for relaying information received from the server by transmitting it to the authentication device. For instance, such information could be acknowledgments, payment approval or refusal information, account information such as the last transaction, the balance, the amount spent this month or even other messages from the server. Preferably, all this information is considered as being sensitive data and is therefore sent in an encrypted form.

Advantageously and whatever the embodiment of the present invention, all sensitive data is always directly entered into the authentication device or extracted from this device, from the user's side. Furthermore, all sensitive data is exchanged between the authentication device and the server in an encrypted message (e.g. a payment request) which can be decrypted by the destination entity only (i.e. the server or the authentication device).

Owing to the method of the present invention, sensitive data is kept at any time in a fully secure environment. Indeed, it should be note that the authentication device is known as being a tamper-resistant device, the server is a trusted entity and all sensitive data is protected by encryption when sending between the authentication device and the server. Accordingly, said sensitive data is only handled in an unencrypted form when it is either within the authentication device or within the server. Aforementioned sensitive data transmitted by the authentication device includes data comprised in the payment request, namely at least the payment amount, the seller identifier and the authentication device identifier.

Other advantages and embodiments will be presented in the following detailed description which also refers to an authentication device for use in the implementation of the above-mentioned method.

### BRIEF DESCRIPTION OF THE DRAWINGS

The present invention will be better understood thanks to the attached figures in which:
Figure 1 is a block diagram depicting the main devices or entities involved in the method of the present invention,
Figure 2 shows the authentication device according to another embodiment.

### DETAILED DESCRIPTION

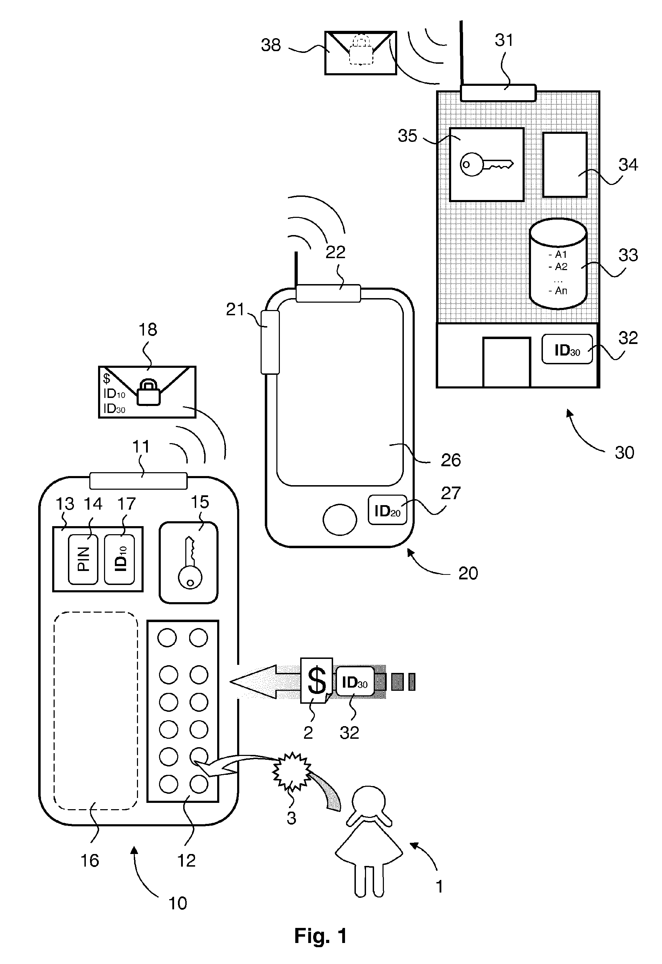

Referring to Fig. 1, it shows three main devices or elements which are used for securely exchanging sensitive data for payment purposes. The first element is an authentication device 10, the second one is a communication device 20 which is represented in this figure by a mobile phone as a non-limited example, and the third element is a server 30 represented by a building hosting a trusted entity (e.g. the e-vendor or an intermediate entity).

The authentication device 10 is a tamper-proof device allowing at least:
- to identify the user 1,
- to acquire a payment amount 2 and a seller identifier 32,
- to display the acquired payment amount 2 on a display 16 which is part of the authentication device 10,
- to acquire user feedback data 3 by means of a user interface 12 which is part of the authentication device 10,
- to generate a secure payment request 18 which can be decrypted by the server 30 only,
- and to transmit the secure request 18 to the communication device 20.

Preferably and as shown in Fig. 1, the authentication device 10 is an enhanced smart card, namely a smart card allowing to perform at least the aforementioned tasks. In this case, the authentication device 10 is a self-powered device that corresponds to an independent device. Thus, the authentication device can be a portable and autonomous device. In variant, the authentication device 10 could be the combination of a smart card (such as a common bank card) and a compliant card reader into which the smart card can be inserted for instance. Alternatively, the authentication device could be a single device (i.e. in one piece) connectable to a personal computer for example. In this case, such a device could be also powered by the computer (communication device 20).

Accordingly, the communication device 20 is not limited to a portable device, but it can also refer to a fixed terminal such as a personal computer.

Since the user 1 (i.e. the client) makes an electronic transaction with the server 30 via the communication device 20, the server 30 can be considered as being the seller, the vendor or the merchant in the present electronic payment method. For this reason, whether the server is effectively the vendor or is merely an intermediate entity has no importance for the understanding of the invention.

The method of the present invention allows to securely exchanging information between the authentication device 10, handled by the user 1, and the server 30. Exchanged information comprises sensitive data. This sensitive data may be different depending on it comes from the authentication device 10 or from the server 30.

One method comprises several steps which will be described now.

The first step of the method aims to acquire by the authentication device 10 a payment amount 2 and a seller identifier 32. The payment amount 2 is a monetary value that the user 1 wants to pay to the server 30 in return for a product or a service suggested by the server 30 (i.e. the recipient representing the seller). The seller identifier 32 allows to uniquely identify the seller in the transaction. The seller identifier will be used to identify the account of the seller onto which the amount 2 has to be credited. The seller identifier 32 may refer directly to a bank account number or it may refer to any other data allowing to determine the account number of the seller.

The next step aims to display the payment amount 2 on a display 16 of the authentication device 10, typically on an LCD screen. Accordingly, the payment amount is displayed by a trusted device or in other words within a secure environment. Therefore the user 1 will be able to check the amount 2 to pay and he will be certain that this amount will correspond to the amount included in the payment request 18 sent by the authentication device 10.

Another step aims to acquire by the authentication device 10 user feedback data 3 by means of a user interface 12 of the authentication device. User feedback data 3 may be the user PIN code or other data entered by the user as a command (order or instruction) which does not necessarily correspond to confidential data. Therefore, user feedback data 3 may be used to authenticate the user 1 and/or may be used as a user input for confirming that data displayed on the display 16 is correct and/or may be used for confirming that the payment can be launched. In this latter case, user feedback data 3 can be used by the authentication device 10 as validation data authorizing the authentication device 10 to transmit the secure request 18.

The method can further include a verification step aiming to verify the acquired user feedback data 3. Accordingly, user feedback data can corresponds to an enabling response or a disabling response provided by the user through the user interface 12. For example, if the displayed data (e.g. the displayed payment amount) is correct, the user presses onto an "OK" button (if the user interface 12 is a keypad) as an enabling response in order to validate and therefore to accept the displayed data. Otherwise, the user presses a "Cancel" button to invalidate and therefore to refuse the displayed data. Alternatively, the user may enter a valid PIN code to accept the displayed data or he may enter an invalid PIN code in order to refuse the displayed data. Of course, to determine if the entered PIN code is valid, the authentication device will undertake the aforementioned verification step.

Besides, in case where user feedback data 3 would be used for authenticating the user 1, acquiring user feedback data by the authentication device could be a step undertaken at the beginning of the method and, if any, repeated later in view to confirm by the user data displayed by the authentication device.

Once the authentication device 10 has acquired both the amount to pay and the seller identifier, it will be able to generate the secure payment request 18. This request comprises at least the payment amount 2, the seller identifier 32 and an authentication device identifier 17. The authentication device identifier 17 is a unique identifier belonging to the authentication device 10 (e.g. a unique card ID number). This identifier 17 has been stored in advance in a secure non volatile data memory 13 of the authentication device (e.g. during the manufacturing or the personalization of the authentication device). Therefore, this identifier 17 can be easily retrieved by the processor of the authentication device. The payment request 18 is secured by an encryption process which is performed within the authentication device 10 by a crypto-processor 15. The encryption operation can be carried out in accordance to any suitable and common encryption algorithm, under symmetric or asymmetric encryption scheme.

After the authentication device has generated the secure payment request and has acquired user feedback data 3 as validation data to confirm that the transaction can be launched, the authentication device 10 transmits the secure payment request 18 to the server 30 by using the communication device 20 as relaying device. In other words, the authentication device 10 transmits the secure payment request 18 to the communication device 20 and then, the communication device forwards the secure payment request 18 to the appropriate server 30 owing to a specific software or application which has been previously installed in the communication device 20.

In order to forward the request to the appropriate recipient, the communication device 20 must known the network address of the server 30 (or must be able to determine this address) in order to properly routing the request. To this end, the server's network address can be acquired by the communication device 20 by several ways. According to one embodiment, the server's network address is directly acquired by the communication device 20 from the server 30 itself. To this end, the server 30 can transmit its network address via a message sent to the communication device 20 or the server can append its network address to the seller identifier 32 if the latter is acquired by the authentication device via the communication device 20. In variant, the server's network address can be determined by the communication device 20 on the basis of the seller identifier 32, for instance by using the seller identifier 32 for retrieving the appropriate network address in a database queried by the communication device 20. Alternatively, the server's network address can be entered into the communication device 20 by the user 1 which could be prompted by the software/application to indicate this network address or to select it among a plurality of network addresses referenced by the communication device 20.

Owing to the method of the present invention and in accordance with one of the above-mentioned embodiment, the payment can be carried out by means of a single payment request 18, since this request already comprises all the requested details to proceed with the electronic transaction. Advantageously, there is no need to establish, between the authentication device and the server, a first round of communication for transmitting preliminary data before receiving subsequent data (e.g. the payment amount) from the authentication device. Such preliminary data could relate to data for deriving a cryptographic key used for subsequent information or could relate to data for checking the authentication device ID or even the user PIN code.

According to one embodiment, the seller identifier 32 acquired by the authentication device 10 is also displayed on its display 16 and the same seller identifier 32 (i.e. the displayed seller identifier) is then included by the authentication device in the secure payment request 18. Thus, in a similar way as what was done for the amount to pay, the user 1 can advantageously check, before launching the transaction, that data identifying the seller is correct. Accordingly, he will get assurance that the displayed seller identifier will correspond to the seller identifier included in the secured payment request 18 by the authentication device. Therefore, there is no means to substitute data (e.g. the payment amount or the seller identifier) displayed by the authentication device on its own display 16 with fraudulent data unbeknownst to the user.

For the same purpose and instead of displaying directly the seller identifier 32 on the display 16, the authentication device 10 could calculate a digest of the seller identifier 32 and it could display this digest on its own screen 16. Such a digest could be determined within the crypto-processor 15, e.g. by applying a hash function on the acquired seller identifier 32. On the other side, the seller (e.g. the server 30) could disclose the result provided by the same hash function applied to its own seller identifier 32. For instance, the user could find, displayed on the Internet site of the seller, the digest determined by the seller when the user wants to undertake the electronic transaction in order to purchase the service or the products suggested by the on-line seller. The digest calculated by the authentication device is base onto the seller identifier 32 received from the server 30 through the communication device 20, thanks to the specific software or application installed therein. Accordingly, if the communication device 20 (infected by a malware) attempts to modify the seller identifier 32, the digest displayed by the authentication device will not match with that disclosed (e.g. displayed) by the server 30 (i.e. the seller). As the digest is a small character string, the user can easily compare the two digests in order to determine if they are identical. If the two digests are identical, the user can be sure that the seller identifier 32 acquired by the authentication device is the true identifier of the seller.

According to one embodiment, at least the payment amount 2 or the seller identifier 32 is acquired by the authentication device 10 through the user interface 12. The payment amount 2 can be acquired by the authentication device 10 from the communication device 20. According to another way, the seller identifier 32 is acquired by the authentication device 10 from the communication device 20 before to be displayed on the display 16 of the authentication device 10, and then the displayed seller identifier is included in the secure payment request 18 if the authentication device has received valid user feedback data 3. Instead of displaying the seller identifier 32, the authentication device 10 could display the digest of this seller identifier. In the case where the payment amount 2 and/or the seller identifier 32 is acquired by the authentication device 10 from the communication device 20, the payment amount and/or the seller identifier may be transmitted by the server 30 to the communication device 20. According to still another way, the payment amount 2 can be manually entered into the authentication device 10 by the user 1 via the user interface 12 and the seller identifier 32 can be automatically acquired by the authentication device 10 from the communication device 20. In the latter case, the seller identifier 32 must be check by the user through the display 16 of the authentication device. This checking operation can be performed via the digest of the seller identifier 32 (i.e. by calculating and displaying the digest by the authentication device), as explained above in detail.

User feedback data 3 corresponds to information provided by the user. Such information may be used as a command for instance to confirm that displayed data are correct, and therefore to confirm that the payment request 18 can be sent towards the server 30. In this case, user feedback data can be provided by the user via the user interface 12, for instance by pressing an "OK" button of a keypad or a by pressing onto several buttons according to a predefined combination. Such a combination can be obtained by pressing simultaneously onto several buttons, e.g. by pressing onto two specific buttons at the same time, so as to avoid providing feedback data accidentally. In one embodiment one can obtain a specific combination by pressing more or less time onto one or several buttons. Alternatively, the combination can be obtained by pressing successively onto several buttons. Advantageously, such a combination could be a secret combination and could refer to a PIN code. Still advantageously, such a secret combination could serve two functions at the same time. Indeed, on the one hand such a PIN code could be used for confirming that the displayed data are correct and that the payment request can be sent to the server. On the other hand, the same PIN code could be used as user authentication data, namely as data for checking that the user of the authentication device 10 is the holder of this authentication device and thus avoiding any third party to use the authentication device on behalf of the device's holder.

In case where user feedback data 3 is used as user authentication data, the authentication checking operation may be performed by the authentication device 10 itself, instead of being performed by an authentication authority. Indeed, as the authentication device is a tamper-proof device, it could store the device holder authentication data 14 in its non volatile data memory 13. Accordingly, the authentication device (e.g. its controller) can compare the acquired user authentication data 3 with the device holder authentication data 14. If the result of the comparison gives is a match, then the user is authenticated as being the device holder (i.e. the owner of the authentication device) and therefore the transaction can be continued, for instance by sending the payment request 18 to the server via the communication device 20.

Advantageously, performing such a checking operation within the authentication device allows delivering payment requests 18 which have been duly checked. Checked payment requests can be stamped by specific marking data before encryption. Consequently, when the server identifies that a payment request 18 has been already checked, it could immediately accept and validate the transaction. Therefore, the processing speed of payment requests at the server can be significantly increased, knowing that checking operations of a large number of electronic transactions could be saved.

It should be noted that holder authentication data 14 and user feedback data 3, in particular user authentication data, is not limited to a code number (such as a PIN code), but could refer to biometric data got by the authentication device through a biometric sensor acting as user interface 12.

The server 30 could also prepare an answerback message 38 intended to the authentication device 10. The content of this answerback message may vary, e.g. according to data included in the payment request 18. For instance, if the cryptographic unit 35 is unable to decrypt the secured payment request or if the decrypted authentication device identifier 17 is unknown, then the answerback message 38 may content information such as "Transaction error" or "Unknown identifier". Otherwise, the answerback message may comprise single information such as "Payment OK".

Nevertheless, the answerback message 38 could also comprise other information such as the new account balance, the available credit total limit, the total expenses, the payment history, the acquired reward points or even data to update the authentication device. Typically, the answerback message 38 is a secured message for ensuring the integrity and/or the confidentiality of its content.

To reach the authentication device, the server needs to know what is the appropriate network address of the communication device 20 or what is the appropriate means allowing to send the answerback message 38 to the communication device 20. Such network address may refer to a phone number, IP or MAC address, email address or any other data allowing retrieving its network address. Generally speaking, such a network address can correspond to a unique identification number 27 allocated to the communication device. In variant the identification number 27 could be used for retrieving such a network address. In order to transmit means allowing the server to subsequently contact the communication device 20, the latter (more particularly its specific software/application) may append its unique identification number 27 to the secured payment request 18 before forwarding this request to the server 30. Advantageously, the same message (i.e. the payment request) can be used for transmitting to the server the network address of the communication device. Therefore, the communication device does not need to transmit a specific message for this purpose. Preferably, said identification number 27 is the only information that this communication device is allowed to append to the payment request. In this way, any other appended data would have no effect because it would simply ignored by the server.

Once the answerback message 38 has been received by the communication device 20, the latter forwards it to the authentication device 10, preferably by the same channel as that used for receiving the secure payment request 18 from the authentication device 10.

Once the authentication device has been reached by the answerback message 38, it is decrypted within the crypto-processor 15 by using appropriate key stored in the memory 13. Then, the authentication device restitutes the content of this message in full or in part, but in clear form to the user via the display 16. By this way, there is no possibility to hack the displayed answerback message and the user can be certain that this message is genuine.

As an option, the first step of the method referring to acquiring by the authentication device the payment amount and the seller identifier could be preceded by an activation step; in particular by the activation of user identification input means (e.g. a keypad or a biometric sensor).

As it has been shown in the above description, the communication device cannot be used for acquiring sensitive data that should be part of the transaction, namely data that should be included into the payment request. Accordingly, the user 1 is never requested to enter in the communication device 20 data which cannot be checked by the authentication device 10 or by the user himself via the display means 16. Moreover, the aforementioned specific software or application installed in the communication device 20 has no ability to encrypt or handle sensitive data interfering, strictly speaking, in the financial transaction, such as payment amount, bank account numbers or identifiers which could be associated to account numbers.

To acquire information (e.g. the payment amount 2 and the seller identifier 32) and to transmit the payment request 18 to the communication device 20, the authentication device comprises at least one communication interface. Preferably, it comprises one communication interface 11 for exchanging data with the communication device 20 and one user interface 12 enabling the user to input feedback data directly into the authentication device. In addition, it should be noted that the user interface 12 can be advantageously used to enter several kinds of data (a PIN code, a amount to pay, a seller ID, validation data, an order for activating an certain function, a command to include in the payment request, etc...).

Preferably, this communication interface 11 supports Near Field Communication (NFC) technology while considering that the communication device 20 is therefore also NFC compliant. As short range communication such as NFC communications requires that the two devices 10, 20 (acting as sender and receiver) are placed very close from each other (maximum 15 cm), there is no risk that data emitted by NFC radio signal reach another device which should not be part of the communication. Of course, the communication interface 11 should be able to support another technology.

As illustrated in Fig. 1, the user interface 12 can be a keypad provided with several buttons, typically buttons corresponding to numbers 0-9 and at least one so-called "enter" or "OK" button and one "clear" button. Of course, other buttons such as a decimal point or alphabetic buttons providing different functions could be also used. According to another embodiment, the user interface 12 could be a biometric sensor such as a fingerprints sensor, a micro-camera or a voice sensor for acquiring biometric data of the user. In such a case, the device holder authentication data 14 will refer to a coding of biometric features of the device holder, e.g. a coding of a fingerprint of the device holder.

It should be also noted that the user interface 12 should not be confused with the magnetic strip or the contact chip of a common credit card. Indeed, given that the user has no possibility to directly interact with a magnetic strip or with a chip, therefore none of these means can be considered as being a user interface. On the contrary, each of these means necessarily requires an additional apparatus (card reader) to get an interaction.

Sensitive components of the authentication device such as the crypto-processor 15 and the non-volatile memory 13 are preferably built in a monolithic component (monolithic chipset).

Of course, the authentication device is also provided (or could be provided) with other components, such as a controller (CPU), storing means, power source, mechanical switch, RF antenna, communication ports, etc... which are less relevant for understanding the present invention.

The communication device 20 further comprises at least one communication interface for receiving and sending data. Preferably, the communication device 20 comprises a first communication interface 21 for exchanging data with the authentication device 10 and a second communication interface 22 for exchanging data with the server 30. According to the preferred embodiment, the first communication interface 21 is a NFC interface which renders the communication device 20 NFC compliant for exchanging data with an NFC authentication device 10. The second communication interface links the communication device 20 to the server 30 via a common communication network such as Internet or a mobile phone network. Of course, the first and second communication interfaces could also refer to other technologies, such as Bluetooth for exchanging data with the authentication device 10 and Wi-Fi for exchanging data with the server 30.

The server 30 also comprises several components illustrated in the Fig. 1. The first component is a communication interface 31 for receiving and sending data from and towards the intermediate device 20. Data exchanged with the communication device 20 could be carried out through any wire or wireless communication network, for instance via Internet network and/or any mobile phone network. The server 30 may further comprises a database 33 for storing a plurality of customer account information (A1, A2, ... An). The server 30 also comprises data storage 34 for storing cryptographic keys required for exchanging secure information with each authentication device 10. Cryptographic operations are performed into the cryptographic unit 35.

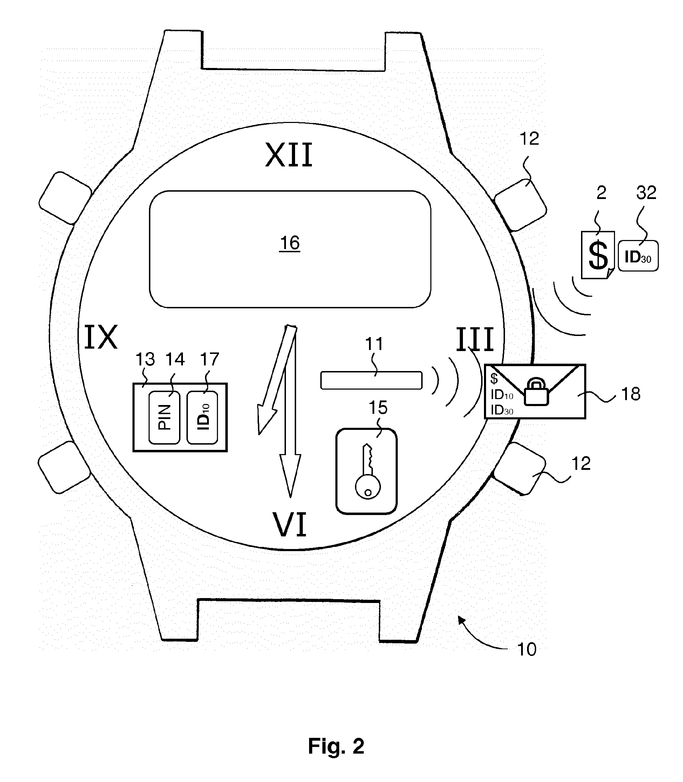

Referring to Fig. 2, the present invention also refers to an authentication device 10 that can be used in any embodiment of the above-described method. To this end, the authentication device 10 of the present invention allow securely exchanging information with a server 30 via a communication device 20 in order to proceed with an electronic payment. More particularly, this authentication device 10 comprises:
- communication means 11 connectable with a communication device 20,
- means for acquiring a payment amount 2 and a seller identifier 32 through said communication means 11,
- a display 16 for displaying the acquired payment amount 2,
- a user interface 12 for acquiring and verifying user feedback data 3,
- means for generating a secure payment request 18 comprising the displayed payment amount, said seller identifier and an authentication device identifier 17 stored in the authentication device 10,
- means for transmitting said secure payment request 18 through said communication means 11.

Preferably, the authentication device 10 is a wrist watch. Advantageously, by integrating the features of such a device in a wrist watch, the user 1 has very convenient authentication device that is always ready to use. Indeed, contrarily to a bank card, the user has no need to search his wallet and to take his card for performing the electronic payment. Moreover, the user keeps his both hands free, while wearing the authentication device close to his hand. Accordingly, the user is able to move it as if he carried it in his hand.

The communication means can be the aforementioned communication interface 11 which may be e.g. NFC compliant. The display 16 will be typically a small LCD screen or a sensitive screen allowing displaying acquired data (e.g. the payment amount, the aforementioned digest). One or several buttons located around the wrist watch or such a sensitive screen could be used as user interface 12 for acquiring user feedback data 3, in particular to validate or invalidate the displayed data and/or for approving and launching the secure payment request 18.

Means for generating the secure payment request and means for transmitting it through the communication interface 11 could be the same as those already described in reference to the other subjects of the present invention.

## Claims

1. Electronic payment method for securely exchanging information between an authentication device (10) and a server (30) via a communication device (20),
the method comprising the steps of:
- acquiring by the authentication device (10) a payment amount (2) and a seller identifier (32),
- displaying the payment amount (2) on a display (16) of said authentication device (10),
- acquiring by the authentication device (10) user feedback data (3) by means of a user interface (12) of said authentication device (10),
- generating, at the authentication device, a secure payment request (18) comprising the displayed payment amount, said seller identifier and an authentication device identifier (17) stored in the authentication device (10),
- transmitting said secure payment request (18) to the server (30) by using said communication device (20) as relaying device.

2. Method of claim 1, wherein at least said payment amount (2) or said seller identifier (32) is acquired by the authentication device (10) through said user interface (12).

3. Method of claim 1, wherein said payment amount (2) is acquired by the authentication device (10) from said communication device (20).

4. Method of claim 1, wherein said seller identifier (32) is acquired by the authentication device (10) from said communication device (20) before to be displayed on the display (16) of said authentication device (10), and then the displayed seller identifier is included in said secure payment request (18) in the event where the authentication device has received valid user feedback data.

5. Method of claim 1, wherein said seller identifier (32) is acquired by the authentication device (10) from said communication device (20) before to calculate by the authentication device (10) and to display on its display (16) a digest of said acquired seller identifier (32), and then said acquired seller identifier (32) is included in said secure payment request (18) in the event where the authentication device has received valid user feedback data.

6. Method of any of claim 3 to 5, wherein at least said payment amount (2) or said seller identifier (32) is transmitted by said server (30) to said communication device (20).

7. Method of any preceding claims, wherein said user feedback data is acquired by the authentication device (10) after displaying the payment amount (2) or displaying the payment amount (2) and the seller identifier (32) or its digest on the display of said authentication device (10) and said user feedback data is used by the authentication device (10) as validation data authorizing the authentication device (10) to transmit the secure request (18).

8. Method of claim 7, wherein said user feedback data is used as user authentication data.

9. Method of claim 8, wherein the authentication device (10) checks if the acquired user feedback data corresponds to authentication device holder authentication data stored in said authentication device (10) and, in case of positive outcome, authorizes the transmission of the secure request (18) to the server (30),

10. Authentication device (10) for securely exchanging payment request in order to proceed with an electronic payment, said authentication device (10) comprising:
- communication means (11) connectable with a communication device (20),
- means for acquiring a payment amount (2) and a seller identifier (32) through said communication means (11),
- a display (16) for displaying the acquired payment amount (2),
- a user interface (12) for acquiring and verifying user feedback data (3),
- means for generating a secure payment request (18) comprising the displayed payment amount, said seller identifier and an authentication device identifier (17) stored in the authentication device (10),
- means for transmitting said secure payment request (18) through said communication means.

11. Authentication device (10) of claim 10, wherein it is a wrist watch.
